# EUROPEAN PATENT APPLICATION

(11) **EP 3 845 506 A1**
(43) Date of publication of application: **07.07.2021**
(21) Application number: 19220014.5
(22) Date of filing: 30.12.2019
(51) Int. Cl.: C04B 28/00, C04B 28/04, C04B 33/132

(54) **PROCESS FOR PRODUCING UNFIRED MASONRY BLOCKS AND SUCH MASONRY BLOCKS**

(71) Applicant: MG Építész Kft., 1125 Budapest (HU)
(72) Inventor: Dr. Márkus, Gábor, H-1125 Budapest (HU)
(74) Representative: Kacsuk, Zsófia

(57) **Abstract**

The invention relates to a process for producing unfired masonry blocks, in particular unfired bricks (14), characterized in that
- forming a raw material mixture by mixing fired ceramic powder with clay and/or clay-containing subsoil such that the fired ceramic powder is at least 15% by weight of the dry matter content of the raw material mixture and the clay content is at least 20% by weight of the dry matter content of the raw material mixture,
- creating a mouldable mass by setting the moisture content of the raw material mixture optionally by adding water, and
- the mouldable mass is moulded and pressed.

The invention further relates to an unfired masonry block (14).

## Description

The present invention relates to a process for the production of unfired masonry blocks, in particular unfired bricks, to unfired masonry blocks and to the use of fired ceramic powder in unfired masonry blocks.

The fired bricks available on the market are made of clay and sand by firing at high temperatures (up to 1000 degrees Celsius), which requires a lot of energy and is extremely harmful to the environment due to the combustion products released into the environment.

Another problem is that it is common practice in brick factories and in other fired ceramic (ceramics in short) factories to grind fired ceramics (e.g. bricks) to size, which generates significant amounts of highly harmful powder waste (especially brick powder waste) that these factories cannot reasonably utilize.

There are so-called unfired bricks made by pressing without firing, often referred to as "earth bricks." These are produced using sand and clay-containing subsoil. In order to stabilize and bind the earth bricks, a significant amount of cement is mixed into the raw material of the earth bricks, because without it the compressive strength and durability of the earth bricks is very limited for construction purposes. Cement, on the other hand, has a high carbon footprint, and it is produced in an energy-intensive and environmentally destructive manner, so from an environmental point of view, it would be desirable to reduce and ultimately eliminate the amount of cement used.

The objective of the present invention is to produce an unfired masonry block, in particular an unfired brick, which is manufactured without firing, by pressing only, from readily available raw materials, using waste ceramic powder. Our further objective is to ensure that the unfired masonry block is sufficiently stable and has sufficient compressive strength for use in construction.

The invention is based on the recognition that the microstructure of fired ceramic powder (especially brick powder) produced by grinding is much better than other natural fine-grained materials (e.g. sand) for producing an unfired masonry element, because the grains of fired ceramic powder have sharp edges and they have a well-adhering structure. It has been found that if the sand in the material of the unfired bricks is at least partially replaced by such a ceramic powder, on the one hand the compressive strength of the brick is surprisingly improved and less cement is required to create the brick, or it is even possible to omit the cement altogether. On the other hand, the technology according to the invention offers a solution for the recycling of large amounts of fired ceramic powder waste generated by grinding in fired ceramic factories (e.g. brick factories). In the following description, the term "fired" is not used, since by ceramic a fired product is meant.

The above objective is achieved by the process according to claim 1, the unfired brick according to claim 9 and the use according to claim 14.

The unfired masonry element produced by the process according to the invention can be considered as an artificial stone which is better for construction than natural stones, since it is breathable; constitutes a thermal mass which can regulate humidity; and its shape, as opposed to natural stones, can be determined by pressing. In addition, the unfired masonry element obtained by the technology according to the invention is homogeneous and inclusion-free as a result of the pressing. A further advantage of the production technology according to the invention is that it can be well integrated into the production process of brick factories or other ceramic factories. A further great advantage of the invention is that the extra fine brick powder or other ceramic powder waste generated by grinding the products in such factories can be recycled on site, as explained above

It is noted here that in the context of the invention, brick powder means in each case fired brick powder. Similarly, when this description refers to "bricks" only, fired bricks are meant. If reference is made to the unfired brick of the present invention, the term "unfired" is used. For ease of understanding, traditional unfired bricks are referred to as earth bricks.

The problems solved by the invention and advantages of the invention are as follows:
The accumulating natural-based industrial waste (powder from ceramic grinding, especially brick powder) is utilized as a secondary raw material and will be a source of revenue instead of costs.

Leaving out the step of firing reduces the cost of brick production by at least 25%.

The technology replaces the use of sand as a raw material.

As the powder produced by ceramic grinding provides a better bond than sand, this increases the compressive strength of the brick and the amount of cement traditionally used in earth bricks can be reduced or even omitted. In this way, the amount of energy required for the production of the unfired bricks can be significantly reduced by what is normally required for the production of cement.

The technology according to the invention provides a way to move towards a sustainable architecture by making walls from this material.

Some preferred embodiments of the invention are shown in the dependent claims.

Further details of the invention will be described with reference to the accompanying drawings.

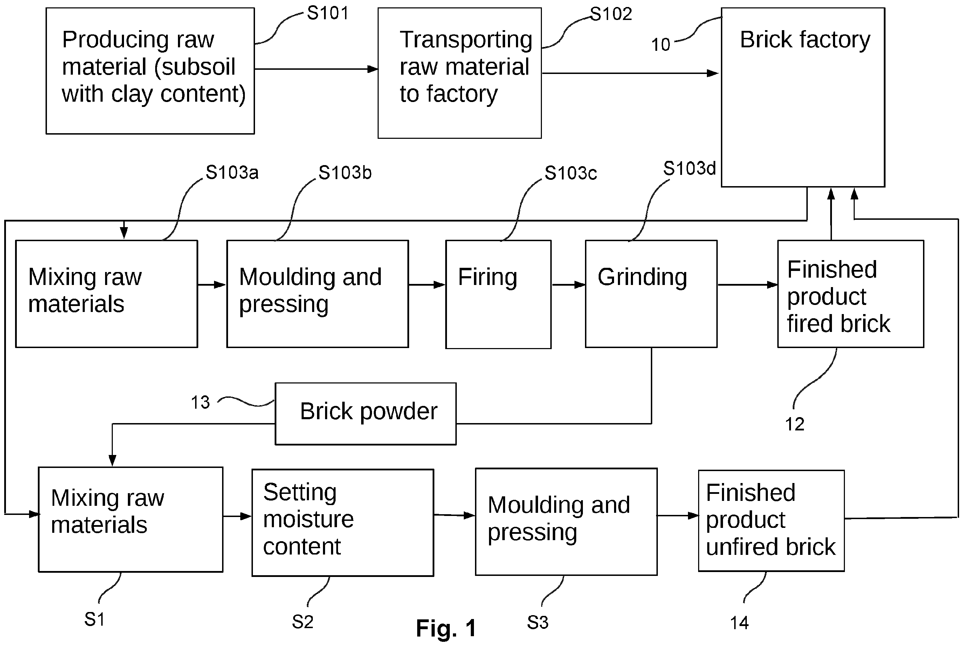

Figure 1 is a schematic block diagram illustrating the integration of the manufacturing process of the present invention into the manufacturing process of a conventional brick factory.

Figure 1 illustrates the integration of the process of the present invention into the manufacturing process of a conventional brick factory. Production is preceded by the delivery of raw materials to the production site. An essential component of fired bricks (and most ceramics) is clay, which is usually extracted by digging the appropriate subsoil. In the context of the present description, clay is understood to mean the collective name of sediments consisting of fine-grained components, the particle size of which does not exceed a few hundred millimetres, as will be apparent to those skilled in the art. The clay may contain different, so-called, clay minerals (e.g. kaolin, phyllosilicates, etc.), quartz grains and possibly other impurities in different proportions, so that different clays may have different compositions depending on their location. Clay does not usually occur in pure form in nature, but is part of the subsoil when mixed with sand or mud. Subsoil is defined as the lower layer of soil below the upper humus layer of the soil, free of organic matter, the depth of which varies depending on the geographical location. Since sand is usually used in addition to clay for the production of fired ceramics, such as bricks, a subsoil of appropriate composition containing both clay and sand can be used directly for production. It should be noted that, of course, not all subsoils are suitable for the production of ceramics, as it is apparent to those skilled in the art. Once the subsoil containing the appropriate clay or sand has been extracted in step S101 and transported to the factory in step S102, in this case a brick factory 10, the processing of the raw materials begins. In the production of conventional fired bricks 12, the raw materials are mixed in the appropriate proportions according to the brick recipe in step S103a, and then the mass is formed in step S103b by moulding and pressing, optionally cutting as part of this step, into the desired shape, e.g. into brick shape. Thereafter, in step S103c, the ceramics, such as bricks, are fired in a kiln at high temperature, thus creating the appropriate structural strength. In the next step, S103d, the fired ceramics, such as bricks, are ground to size, resulting in a finished product, in this case fired bricks 12, and waste in the form of fired ceramic powder, in this case brick powder 13. Due to the brittleness and hardness of fired ceramics, grinding produces a very fine-textured and at the same time very sharp fired ceramic powder.

In step S1 of the process according to the invention, a mixture of raw materials is formed, in which clay and/or clay-containing subsoil is mixed with fired ceramic powder (brick powder 13). It is noted that the recognition under lying the invention is not the order in which the ingredients of the raw material mixture are added, so that the ingredients can be mixed in different orders or, possibly in several parts. In a particularly preferred embodiment, the powder waste generated by grinding fired ceramics, in particular fired bricks 12 formed in step S103d described above, is used as the fired ceramic powder. It should be noted, however, that other ceramic powders from the ceramics industry (e.g., porcelain, tile, etc.) may be used in the process of the present invention.

The raw material mixture is preferably produced by means of a mixing device, more preferably a closed mixing device, by placing the ingredients in the mixing device and then homogenizing the ingredients. Since inhalation of the fired ceramic powder is harmful to health, in a preferred embodiment, the fired ceramic powder (in this case brick powder 13) formed by grinding in step S103d is extracted from the source in a closed system, such as a pipeline, and fed to the closed mixing device. In this way, direct contact with fired ceramic powder can be minimized.

In a possible embodiment, the clay and/or clay-containing subsoil used in the process is dried before the raw material is added to the mixture, i.e. the moisture content is significantly reduced, and then the dried clay and/or clay-containing subsoil is ground to powder. Drying and grinding can be carried out, for example, by methods known per se (e.g. sun drying) and by means of equipment (e.g. hammer mill) as is known to the person skilled in the art.

In the process according to the invention, fired ceramic powder and clay and/or clay-containing subsoil are mixed into the raw material mixture such that the fired ceramic powder is at least 15% by weight of the dry matter content of the raw material mixture and the clay content is at least 20% by weight of the dry matter content of the raw material mixture. In the context of the present description, dry matter content is understood to mean the remainder of the mixture of the raw material just formed after removal of its moisture content, as it is known to those skilled in the art. By "just formed" is meant that in the context of the present invention, dry matter content means the dry matter content of the raw material mixture as determined in the state in which the water in the raw material mixture is in a chemically unbound form. That is, for example, when cement is added (see below), the water has not yet reacted chemically to form a hydrate bond.

If a clay-containing subsoil is used to prepare the raw material mixture (in practice this is usually the case), other substances, such as sand, may be included in the raw material mixture together with the subsoil. The process according to the invention preferably uses a clay-containing subsoil having a clay content of at least 30% by weight, preferably at least 40% by weight. If the clay content of the subsoil is low, pure clay may be added to the raw material mixture to provide the appropriate clay content. In a possible embodiment, in order to improve the physical properties (in particular its water resistance and frost tolerance) of the unfired masonry block to be produced, in this case unfired bricks 14, cement and/or ash are mixed into the raw material mixture as a binder. In a preferred embodiment, the binder is added to the raw material mixture in such a way that the amount of the binder is at least 5% by weight of the dry matter content of the raw material mixture. The part of the dry matter content of the raw material mixture other than clay, fired ceramic powder or, optionally binder is mainly sand and to a lesser extent sludge. For example, sand and sludge may be added to the raw material mixture as part of the subsoil, but the sand may optionally be added separately to the raw material mixture. In this case, it is preferable to use sharp-edged mine sand instead of rounded-edged river sand.

In the next step S2 of the process, a mouldable (shapable) mass is produced by setting the moisture content of the raw material mixture, optionally by adding water. In the context of the present invention, a mouldable mass is understood to mean a mixture of raw materials with a consistency which does not dust and does not crumble but is not malleable. That is, a consistency commonly used in the manufacture of earth bricks, as is known to those skilled in the art. The consistency of the mouldable mass is preferably similar to that of earth-moist (EM) concrete. It is noted that, such embodiments are conceivable in which the moisture content of the clay and/or clay-containing subsoil that is used to prepare the raw material mixture is alone sufficient to set the moisture content of the raw material mixture, i.e. to form a mouldable mass. In this case, setting the moisture content is understood to mean controlling the moisture content. If dried clay and/or clay-containing subsoil is used, the moisture content required for moulding can be set by adding water.

In the next step S3 of the process according to the invention, unfired bricks 14 are produced from the mouldable mass by moulding and pressing. To do this, the mouldable mass is put in a pressing tool and pressed. The moulding and pressing is preferably carried out according to known technologies used in the production of earth bricks. The unfired bricks 14 according to the invention can be formed, for example, by using a suitable brick press, so that pressing and moulding take place simultaneously. Optionally, the mouldable mass can be compressed into larger blocks, in which case the process includes cutting the formed larger blocks to the desired size after compression. The moulding and pressing results in the unfired brick 14 of the present invention as a finished product, which is preferably allowed to dry before use. Of course, in addition to bricks, other unfired masonry blocks can be produced by a similar process.

The present invention therefore relates to an unfired masonry block 14 consisting of a mixture of pressed raw materials made using clay and/or clay-containing subsoil and fired ceramic powder (preferably brick powder 13). In a particularly preferred embodiment, the fired ceramic powder used for the raw material mixture according to the invention is powder waste formed by grinding fired ceramics, in particular fired bricks. In a preferred embodiment, the clay and/or clay-containing subsoil in the pressed raw material mixture is dried and ground to a powder, so that a more homogeneous mixing with the fired ceramic powder can be achieved. A further advantage of drying is that the appropriate moisture content of the raw material mixture required for moulding can be easily set in a well-controlled manner by the subsequent addition of water.

In the raw material mixture of the unfired masonry element according to the invention, the fired ceramic powder constitutes at least 15% by weight of the dry matter content of the raw material mixture and the clay constitutes at least 20% by weight of the dry matter content of the raw material mixture. The raw material mixture may optionally contain cement and/or ash as a binder, which binder preferably constitutes at least 5% by weight of the dry matter content of the raw material mixture. As previously mentioned, the dry matter content of the raw material mixture means the dry matter content of the raw material mixture as measured in the state in which the water is in a chemically unbound state in the raw material mixture. It is noted that the dry matter content of the raw material mixture can be determined indirectly even before the preparation of the raw material mixture, i.e. the mixing of the ingredients, for example by determining the percentage of the dry matter content of the ingredients separately before mixing. The proportion of cement and/or ash binder can be varied depending on the desired physical properties (water resistance, frost resistance, air permeability) of the unfired masonry block.

### Example 1

In an exemplary embodiment, 80 litres of clay-contained subsoil from the location Zirc in Hungary (clay content being about 30-40%, sand and sludge content about 60-70%), 15 litres of fired ceramic powder (in this case brick powder 13 formed by grinding) and 5 litres of cement are mixed to obtain a dry raw material mixture, the moisture content of which was set by gradually adding 3-7 litres of water by increasing the amount of water within the specified range until a properly shapable (earth-moist consistency) mass was obtained. From this mass brick-shaped unfired masonry blocks, i.e. unfired bricks 14 of 10x18x36 cm size were produced by moulding and pressing. Thus, in this embodiment, the unfired brick 14 contained not only sand but also ceramic powder (grinded brick powder 13).

As a control, the above raw material mixture was prepared with the difference that 15 litres of mine sand was used instead of 15 litres of fired ceramic powder. From the mixture thus formed, control earth bricks of 10x18x36 cm size were also produced by the same moulding and pressing process, which control earth bricks did not contain any brick powder at all. The mechanical properties of the unfired bricks 14 of the present invention and the control earth bricks were then examined. The compressive strength (eliminating the measurement errors by averaging) was 6.3 MPa for the unfired bricks 14 containing ceramic powder, while it was only 5.9 MPa for the control earth bricks containing only sand. During our measurements, we found that by increasing the proportion of ceramic powder, the compressive strength of the unfired bricks 14 can be further increased. Thus, in the example above, the increase in compressive strength of 6.5% - compared to conventional earth bricks - can be brought up to more than 10% by replacing the sand content of the raw material mixture with a higher proportion of ceramic powder.

Compared to conventional earth bricks, part of the sand in the unfired masonry element according to the invention is thus replaced by fired ceramic powder, preferably brick powder 13. As can be seen from the example above, this unexpectedly results in an improvement in compressive strength. Accordingly, the invention further relates to the use of fired ceramic powder, in particular brick powder 13, for at least partially replacing the sand content of unfired bricks 14.

Various modifications will be apparent to a person skilled in the art without departing from the scope of protection determined by the attached claims.

## Claims

1. Process for producing unfired masonry blocks, in particular unfired bricks (14), ***characterized by***
- forming a raw material mixture by mixing fired ceramic powder with clay and/or clay-containing subsoil such that the fired ceramic powder is at least 15% by weight of the dry matter content of the raw material mixture and the clay content is at least 20% by weight of the dry matter content of the raw material mixture,
- creating a mouldable mass by setting moisture content of the raw material mixture optionally by adding water, and
- producing an unfired masonry element from the mouldable mass by moulding and pressing.

2. Process according to claim 1, ***characterized in that** the* clay and/or clay-containing subsoil is dried and ground to a powder before it is added to the raw material mixture.

3. Process according to claim 2, ***characterized in that*** the clay and/or the clay-containing subsoil is ground to a powder by means of a hammer mill.

4. Process according to any one of claims 1 to 3, ***characterized in that*** a binder selected from the group consisting of cement and ash is mixed into the raw material mixture and thereby the amount of binder in the raw material mixture is at least 5% by weight of the dry matter content of the raw material mixture.

5. Process according to any one of claims 1 to 4, ***characterized in that** the* dry matter content of the raw material mixture is 95 to 98% by weight of the raw material mixture.

6. Process according to any one of claims 1 to 5, ***characterized by*** using a clay-containing subsoil which has a clay content of at least 30% by weight, preferably at least 40% by weight.

7. Process according to any one of claims 1 to 6, ***characterized by*** using as the fired ceramic powder, powder waste (13) formed by grinding fired ceramics, in particular fired bricks.

8. Process according to claim 7, ***characterized in that*** the raw material mixture is produced in a mixing device and the powder waste generated by grinding the fired ceramic is extracted from the place of origin through a closed system and fed to the mixing device.

9. Unfired masonry element, in particular unfired brick (14), ***characterized in that*** it consists of a pressed raw material mixture comprising clay and/or clay-containing subsoil and fired ceramic powder, in which raw material mixture the fired ceramic powder is at least 15% by weight of the dry matter content of the raw material mixture and the clay content is at least 20% by weight of the dry matter content of the raw material mixture.

10. Unfired masonry element according to claim 9, ***characterized in that** the* fired ceramic powder is powder waste (13) formed by the grinding of fired ceramics, in particular fired bricks.

11. Unfired masonry element according to claim 9 or 10, ***characterized in that** the* pressed raw material mixture contains a binder selected from the group consisting of cement and ash, which binder represents at least 5% by weight of the dry matter content of the raw material mixture.

12. Unfired masonry element according to any one of claims 9 to 11, ***characterized in that** the* pressed raw material mixture is produced using dried and ground clay and/or clay-containing subsoil.

13. Unfired masonry element according to any one of claims 9 to 12, ***characterized in that*** it is produced by a process according to any one of claims 1 to 8.

14. Use of fired ceramic powder to at least partially replace the sand content of unfired masonry blocks, in particular unfired bricks (14).

15. Use according to claim 14, ***characterized in that*** fired brick powder (13) is used as the fired ceramic powder.
